# EUROPEAN PATENT APPLICATION

(11) **EP 2 857 987 A1**
(43) Date of publication of application: **08.04.2015**
(21) Application number: 12879876.6
(22) Date of filing: 30.06.2012
(51) Int. Cl.: G06F 17/30

(54) **ACQUIRING METHOD, DEVICE AND SYSTEM OF USER BEHAVIOR**

(71) Applicant: Huawei Technologies Co., Ltd., Longgang District Shenzhen, Guangdong 518129 (CN)
(72) Inventor: HU, Yusheng, Shenzhen Guangdong 518129 (CN); ZHANG, Jing, Shenzhen Guangdong 518129 (CN); ZHANG, Jinxing, Shenzhen Guangdong 518129 (CN)
(74) Representative: Körber, Martin Hans
(86) International application number: PCT/CN2012/077984
(87) International publication number: WO 2014/000293

(57) **Abstract**

Embodiments of the present invention provide a method, a device, and a system for acquiring a user behavior. In the embodiments of the present invention, an acquired URL request matches a database, and the database stores a URL actively initiated by a user recognized by adopting a web crawler technology. If a URL contained in the URL request matches a corresponding URL actively initiated by a user in the database, it may be determined that the URL request is actively initiated by the user. Therefore, a network forwarding device or a server can rapidly and accurately acquire a behavior that a user actively initiates a URL request so as to further analyze a user behavior.

## Description

### TECHNICAL FIELD

The present invention relates to the communications technologies, and in particular to a method, a device, and a system for acquiring a user behavior.

### BACKGROUND

A uniform resource locator (Uniform Resource Locator, URL) is also referred to as a web page address and is a standard resource address on the Internet (Internet). A user equipment usually accesses a URL through the Hyper Text Transfer Protocol (Hyper Text Transfer Protocol, HTTP) to access the Internet. URLs initiated by a user equipment include a URL actively initiated by a user and a URL automatically initiated by a user equipment. For example, in a frame-based web page mode, when a user accesses a web page, a user equipment initiates a URL request, a server usually delivers a web page containing a URL link to the user equipment, and the user equipment parses the web page and automatically initiates a URL request corresponding to the URL link to the server or other servers. From the point of view of the user, the user only initiates one URL request through the user equipment to obtain content of the web page. However, from the points of view of network forwarding devices, such as a gateway and a router, and a server, a plurality of URL requests initiated by the user equipment are received, and these URL requests include a URL actively initiated by a user and a URL automatically initiated by a user equipment.

Generally, a network forwarding device or a server determines, by parsing a web page, whether a URL initiated by a user equipment is a URL automatically initiated by a user equipment, so as to acquire a behavior that a user actively initiates a URL request and further analyze a user behavior.

For the network forwarding device or the server, a large number of computing resources and throughput are to be occupied to parse a web page and a long time is taken. In addition, some URL links cannot be generated until a script program is executed, causing that some URLs fail to be acquired and resulting in an inaccurate result of acquiring a behavior that a user actively initiates a URL request.

### SUMMARY

Embodiments of the present invention provide a method, a device, and a system for acquiring a user behavior to rapidly and accurately acquire a behavior that a user actively initiates a URL request.

According to one aspect, a method for acquiring a user behavior is provided, including:
acquiring a URL request sent by a user equipment; and
determining, if a URL contained in the URL request matches a corresponding URL actively initiated by a user in a database, that the URL request is actively initiated by the user, where the database stores the URL actively initiated by a user recognized by adopting a web crawler technology.

According to another aspect, a device for acquiring a user behavior is provided, including:
an acquiring unit, configured to acquire a URL request sent by a user equipment; and
a determining unit, configured to determine, when a URL contained in the URL request matches a corresponding URL actively initiated by a user in a database, that the URL request is actively initiated by the user, where the database stores the URL actively initiated by a user recognized by adopting a web crawler technology.

According to still another aspect, a system for acquiring a user behavior is provided, including a user equipment and the device for acquiring a user behavior.

As can be seen from the technical solutions, in the embodiments of the present invention, an acquired URL request matches a database, the database stores a URL actively initiated by a user recognized by adopting a web crawler technology, and if a URL contained in the URL request matches a corresponding URL actively initiated by a user in the database, it can be determined that the URL request is actively initiated by the user so that a network forwarding device or a server can rapidly and accurately acquire a behavior that a user actively initiates a URL request so as to further analyze a user behavior.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic flow chart of a method for acquiring a user behavior according to an embodiment of the present invention;
FIG. 2 is a schematic structural diagram of a device for acquiring a user behavior according to another embodiment of the present invention; and
FIG. 3 is a schematic structural diagram of a device for acquiring a user behavior according to still another embodiment of the present invention.

### DESCRIPTION OF EMBODIMENTS

In order to make the objectives, technical solutions, and advantages of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

A method, a device, and a system for acquiring a user behavior provided in the embodiments of the present invention are applicable to a network where a URL is used as a network resource address. In the embodiments of the present invention, a request actively initiated by a user refers to a URL manually initiated by a user, for example, a URL actively initiated by a user by inputting a URL in the address bar of a browser, a URL actively initiated by a user by clicking a URL link on a web page with a mouse, and the like; and a URL automatically initiated by a user equipment refers to a URL automatically initiated without a manual operation of a user after a user equipment obtains, according to a web page returned by a server in response, a URL on the web page directly or through computation, where the computation includes the execution of a program.

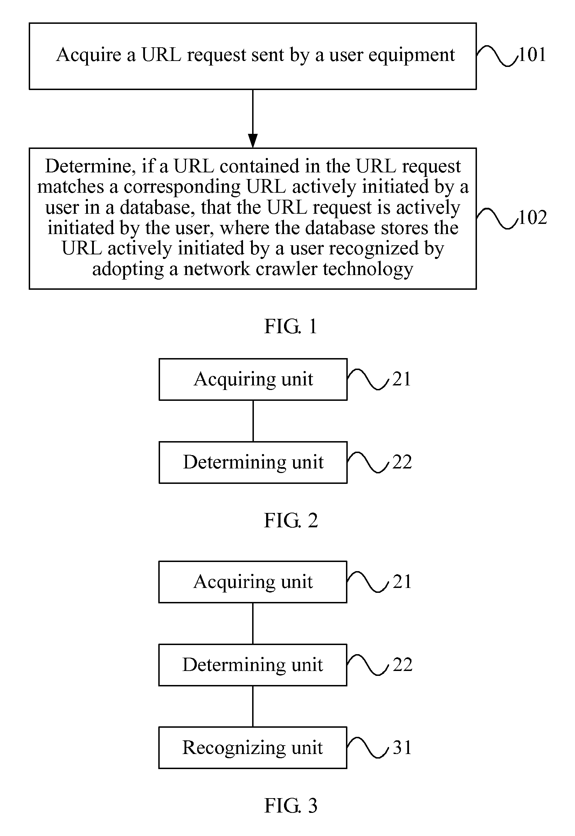

FIG. 1 is a schematic flow chart of a method for acquiring a user behavior according to an embodiment of the present invention. As shown in FIG. 1, the method for acquiring a user behavior in this embodiment includes:
101. Acquire a URL request sent by a user equipment.
102. Determine, if a URL contained in the URL request matches a corresponding URL actively initiated by a user in a database, that the URL request is actively initiated by the user, where the database stores the URL actively initiated by a user recognized by adopting a web crawler technology.

It should be noted that an executor of 101 and 102 includes but is not limited to a network forwarding device or a server. The network forwarding device refers to an intermediate device that forwards information between a user equipment and a server, for example, a gateway, a router, or the like.

Alternatively, in an alternative implementation manner of this embodiment, a gateway serving as an executor is used as an example: After receiving a URL request sent by a user equipment, the gateway parses a packet in the URL request based on a deep packet inspection technology to acquire a URL contained in the URL request.

On a network where a URL is used, a URL request may be actively initiated by a user or automatically initiated by a user equipment.

Alternatively, in an alternatively implementation manner of this embodiment, in 101, specifically a URL that is actively initiated by a user by inputting a URL in the address bar of a browser and sent by the user equipment may be acquired.

Alternatively, in an alternative implementation manner of this embodiment, in 101, specifically a URL that is actively initiated by a user by clicking a URL link on a web page with a mouse and sent by the user equipment may be acquired.

Alternatively, in an alternative implementation manner of this embodiment, in 101, specifically a URL that is automatically initiated when a user equipment obtains a URL through computation and sent by the user equipment may be acquired. The URL on a web page may be obtained through computation by executing a program on the web page.

Alternatively, in an alternative implementation manner of this embodiment, in 101, specifically a URL that is automatically initiated when a user equipment directly obtains a URL and sent by the user equipment may be acquired. The URL may be directly obtained from a web page by matching a regular expression.

Alternatively, in an alternative implementation manner of this embodiment, before 102, a target web page may be analyzed by further adopting a web crawler technology so as to recognize a URL actively initiated by a user; and then, the recognized URL actively initiated by a user is stored in the database.

Alternatively, in an alternative implementation manner of this embodiment, before 102, a target web page may be analyzed by further adopting a web crawler technology so as to recognize a URL automatically initiated by a user equipment; and then, the recognized URL automatically initiated by a user equipment is stored in the database. Accordingly, after 101, it may be further included: determining, if a URL contained in the URL request matches a corresponding URL automatically initiated by a user equipment in the database, that the URL request is automatically initiated by the user equipment.

Alternatively, in an alternative implementation manner of this embodiment, a mapping between the recognized URL actively initiated by a user and the URL automatically initiated by a user equipment may be further stored in the database so as to perform an evaluation based on quality of service of web page accessing according to the mapping.

In this embodiment, the web crawler technology is a program for automatically retrieving a web page. By using a designated domain name, the program obtains, starting from a URL of one or several target web pages (that is, a URL of a seed web page), a URL on a target web page. In the process of capturing a web page, new URLs are continuously extracted from a current page and placed in a queue. Through an extracting behavior of a web page corresponding to each URL, two types of URLs may be recognized: one type is a URL for which a web page corresponding to the URL can only be acquired through active clicking of a user, and the other type is a URL for which a web page corresponding to the URL is directly loaded in a frame-based web page mode. Specifically, a common behavior of the web crawler may include the following:

A URL on a web page, that is, the target web page is determined as a seed, and starting from the seed web page, content of the seed web page is acquired. At this time, a URL on the seed web page is recognized as a URL actively initiated by a user. URLs embedded in a frame might be triggered in order to acquire the entire seed web page, and these URLs are recognized as URLs automatically initiated by a user equipment. The content on the web page is analyzed and returned, and the URL on the web page is acquired and recognized as a new URL that a user actively accesses. The foregoing operation is repeated until there is no more accessible URL.

The web crawler technology may specifically include technologies such as breadth first, depth first or infinite loop prevention access, and no further details are provided herein.

In this embodiment, an acquired URL request matches a database, the database stores a URL actively initiated by a user recognized by adopting a web crawler technology, and if a URL contained in the URL request matches a corresponding URL actively initiated by a user in the database, it may be determined that the URL request is actively initiated by the user, so that a network forwarding device or a server can rapidly and accurately acquire a behavior that a user actively initiates a URL request, so as to further analyze a user behavior. For example, the clicking number of a hot link may be analyzed according to a URL actively initiated by a user. For another example, a URL actively initiated by a user may be recorded so as to reduce the storage volume of the URL access log of a user.

It should be noted that, the above method embodiments are expressed as a series of operations for ease of description; however, it should be known to persons skilled in the art that the present invention is not limited to the sequence of the operations described, because some steps may be performed in other sequences or concurrently according to the present invention. Next, persons of ordinary skill in the art should also know that, the embodiments described in the specification are exemplary embodiments, and revolved actions and modules are not indispensable for the present invention.

In the foregoing embodiments, descriptions of the embodiments have different emphases, and for parts that are not described in detail in one embodiment, reference may be made to the related description of other embodiments.

FIG. 2 is a schematic flow chart of a device for acquiring a user behavior according to another embodiment of the present invention. As shown in FIG. 2, the device for acquiring a user behavior in this embodiment may include an acquiring unit 21 and a determining unit 22. The acquiring unit 21 is configured to acquire a URL request sent by a user equipment; and the determining unit 22 is configured to determine, when a URL contained in the URL request matches a corresponding URL actively initiated by a user in a database, that the URL request is actively initiated by the user, where the database stores the URL actively initiated by a user recognized by adopting a web crawler technology.

On a network where a URL is used, a URL request may be actively initiated by a user or automatically initiated by a user equipment.

Alternatively, in an alternative implementation manner of this embodiment, the acquiring unit 21 may specifically acquire a URL that is actively initiated by a user by inputting a URL in the address bar of a browser and sent by the user equipment.

Alternatively, in an alternative implementation manner of this embodiment, the acquiring unit 21 may specifically acquire a URL that is actively initiated by a user by clicking a URL link on a web page with a mouse and sent by the user equipment.

Alternatively, in an alternative implementation manner of this embodiment, the acquiring unit 21 may specifically acquire a URL that is automatically initiated as the user equipment obtains a URL through computation and sent by the user equipment. The URL on a web page may be obtained through computation by executing a program on the web page.

Alternatively, in an alternative implementation manner of this embodiment, the acquiring unit 21 may specifically acquire the URL request that is automatically initiated as the user equipment directly obtains a URL and sent by the user equipment. The URL may be directly obtained from a web page by matching a regular expression.

Alternatively, in an alternative implementation manner of this embodiment, as shown in FIG. 3, the device for acquiring a user behavior provided in this embodiment may further include a recognizing unit 31, configured to analyze a target web page by adopting a web crawler technology, recognize a URL automatically initiated by a user equipment, and store the recognized URL automatically initiated by a user equipment in the database.

Alternatively in an alternative implementation manner of this embodiment, the recognizing unit 31 may further analyze a target web page by adopting a web crawler technology so as to recognize a URL automatically initiated by a user equipment and store the recognized URL automatically initiated by a user equipment in the database. Accordingly, the determining unit 22 may be further configured to determine, when a URL contained in the URL request matches a corresponding URL automatically initiated by a user equipment in the database, that the URL request is automatically initiated by the user equipment.

Alternatively, in an alternative implementation manner of this embodiment, the recognizing unit 31 may further store a mapping between the recognized URL actively initiated by a user and the URL automatically initiated by a user equipment in the database so as to enable evaluation based on quality of service of web page accessing according to the mapping.

In this embodiment, the determining unit matches a URL request acquired by the acquiring unit and a database, where the database stores a URL actively initiated by a user recognized by adopting a web crawler technology. If the URL contained in the URL request matches a corresponding URL actively initiated by a user in the database, it may be determined that the URL request is actively initiated by the user, so that a network forwarding device or a server can rapidly and accurately acquire a behavior that a user actively initiates a URL request so as to further analyze a user behavior.

Another embodiment of the present invention provides a system for acquiring a user behavior, including a user equipment and the device for acquiring a user behavior provided in either the embodiment corresponding to FIG. 2 or the embodiment corresponding to FIG. 3.

It can be clearly understood by persons skilled in the art that, for the purpose of convenient and brief description, for a detailed working process of the foregoing system, device and unit, reference may be made to a corresponding process in the method embodiments, and therefore no further details are provided herein.

In several embodiments provided in the present application, it should be understood that the disclosed system, device, and method may be implemented in other ways. For example, the described device embodiments are merely exemplary. For example, the unit division is merely logical function division and can be other division in actual implementation. For example, multiple units or components can be combined or integrated into another system, or some features can be ignored or not performed. Furthermore, the shown or discussed coupling or direct coupling or communication connection may be accomplished through some interfaces, and indirect coupling or communication connection between devices or units may be electrical, mechanical, or in other forms.

Units described as separate components may be or may not be physically separated. Components shown as units may be or may not be physical units; that is, the components may be integrated or distributed to a plurality of network units. Some or all of the modules may be selected to achieve the objective of the solution of the embodiment according to actual demands.

In addition, various functional units according to each embodiment of the present invention may be integrated in one processing module or may exist as various separate physical units, or two or more units may also be integrated in one unit. The integrated unit may be implemented through hardware, or may also be implemented in a form of a software functional module.

The integrated unit embodied in the form of a software function unit may be stored in a computer readable storage medium. The software function unit is stored in one storage medium, and includes several instructions to instruct computer equipment (for example, a personal computer, a server, or a network equipment) to perform a part of steps of the method described in the embodiments of the present invention. The storage medium includes various media capable of storing program codes, such as, a flash disk, a mobile hard disk, a Read-Only Memory (ROM), a Random Access Memory (RAM), a magnetic disk or an optical disk.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not cause the essence of corresponding technical solutions to depart from the spirit and scope of the present invention.

## Claims

1. A method for acquiring a user behavior, comprising:
Acquiring a URL request sent by a user equipment; and
Determining, if a URL contained in the URL request matches a corresponding URL actively initiated by a user in a database, that the URL request is actively initiated by the user, wherein the database stores the URL actively initiated by a user recognized by adopting a web crawler technology.

2. The method according to claim 1, further comprising:
analyzing a target web page by adopting the web crawler technology so as to recognize the URL actively initiated by a user; and
storing the recognized URL actively initiated by a user in the database.

3. The method according to claim 2, further comprising:
analyzing the target web page by adopting the web crawler technology so as to recognize a URL automatically initiated by a user equipment; and
storing the recognized URL automatically initiated by a user equipment in the database.

4. The method according to claim 3, further comprising:
storing a mapping between the recognized URL actively initiated by a user and the URL automatically initiated by a user equipment in the database.

5. The method according to any one of claims 1 to 4, after the acquiring a URL request sent by a user equipment, further comprising:
determining, if the URL contained in the URL request matches a corresponding URL automatically initiated by a user equipment in the database, that the URL request is automatically initiated by the user equipment.

6. The method according to any one of claims 1 to 5, wherein the acquiring a URL request sent by a user equipment comprises:
acquiring a URL that is actively initiated by the user by inputting a URL in the address bar of a browser and sent by the user equipment; or
acquiring a URL that is actively initiated by the user by clicking a URL link on a web page with a mouse and sent by the user equipment; or
acquiring a URL that is automatically initiated as the user equipment obtains a URL through computation and sent by the user equipment; or
acquiring the URL request that is automatically initiated as the user equipment directly obtains a URL and sent by the user equipment.

7. A device for acquiring a user behavior, comprising:
an acquiring unit, configured to acquire a URL request sent by a user equipment; and
a determining unit, configured to determine, when a URL contained in the URL request matches a corresponding URL actively initiated by a user in a database, that the URL request is actively initiated by the user, wherein the database stores the URL actively initiated by a user recognized by adopting a web crawler technology.

8. The device according to claim 7, wherein the device further comprises a recognizing unit, configured to:
analyze a target web page by adopting the web crawler technology so as to recognize the URL actively initiated by a user and store the recognized URL actively initiated by a user in the database.

9. The device according to claim 8, wherein the recognizing unit is further configured to:
analyze the target web page by adopting the web crawler technology so as to recognize a URL automatically initiated by a user equipment and store the recognized URL automatically initiated by a user equipment in the database.

10. The device according to claim 9, wherein the recognizing unit is further configured to:
store a mapping between the recognized URL actively initiated by a user and the URL automatically initiated by a user equipment in the database.

11. The device according to any one of claims 7 to 10, wherein the determining unit is further configured to:
determine, when the URL contained in the URL request matches a corresponding URL automatically initiated by a user equipment in the database, that the URL request is automatically initiated by the user equipment.

12. The device according to any one of claims 7 to 11, wherein the acquiring unit is specifically configured to:
acquire a URL that is actively initiated by the user by inputting a URL in the address bar of a browser and sent by the user equipment; or
acquire a URL that is actively initiated by the user by clicking a URL link on a web page with a mouse and sent by the user equipment; or
acquire a URL that is automatically initiated as the user equipment obtains a URL through computation and sent by the user equipment; or
acquire the URL request that is automatically initiated as the user equipment directly obtains a URL and sent by the user equipment.

13. A system for acquiring a user behavior, comprising a user equipment and the device for acquiring a user behavior according to any one of claims 7 to 12.
